(19) Europäisches Patentamt

European Patent Office

Office européen des brevets

(11) **EP 2 806 571 A1**

(12) **EUROPEAN PATENT APPLICATION**

(43) Date of publication:
**26.11.2014 Bulletin 2014/48**

(51) Int Cl.:
**H04B 3/46** (2006.01)   **H04L 5/00** (2006.01)

(21) Application number: **13305667.1**

(22) Date of filing: **23.05.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT**
**92100 Boulogne-Billancourt (FR)**

(72) Inventors:
• **Maes, Jochen**
  **2431 Laakdal (BE)**
• **Timmers, Michael**
  **3020 Herent (BE)**

(74) Representative: **D'Halleweyn, Nele Veerle Trees Gertrudis et al**
**Arnold & Siedsma**
**Bezuidenhoutseweg 57**
**2594 AC The Hague (NL)**

(54) **Method and access node for connecting subscriber lines**

(57)     Access node for connecting N subscriber lines; said access node comprising M digital signal processors configured for generating M pilot signals; M being smaller than N; a controller configured for assigning M subscriber lines of said N subscriber lines for transmission of said M pilot signals; and for associating at least a first unassigned subscriber line of said N subscriber lines with a first assigned subscriber line of said M assigned subscriber lines; and a signal handling part controlled by said controller for transmitting a first pilot signal of said M pilot signals, to be transmitted over the first assigned subscriber line, simultaneously to at least the first unassigned subscriber line and the first assigned subscriber line.

FIG. 2

**EP 2 806 571 A1**

**Description**

<u>Technical field</u>

Embodiments of the invention relate to the field of access nodes and methods for connecting a plurality of subscribers, and in particular to the field of G.fast DSL technology.

<u>Background</u>

With G.fast DSL technology in a fiber-to-the-distribution-point (FTTdp) deployment, a wide variability exists between the number of potential end customers and the number of actual subscribers.

A straightforward G.fast deployment would foresee a dedicated digital signal processor (DSP) and analog front end (AFE) for each potential end customer. With a typical take rate below 50%, this drives up cost and size above two times what is strictly required. The difficulty with such solutions typically lies in the multitude of distribution points in FTTdp versus fiber-to-the-neighborhood (FTTN).

A solution consists in providing a so-called underprovisioned point-to-point scheme, as illustrated in figure 1C. Such a solution is disclosed in detail in European patent application with publication number EP 2 536 034 in the name of the Applicant, the content of which is included in its entirety by reference. The solution comprises a switch matrix in between the DSP and AFE, which allows re-assigning digital resources to ports depending on which potential customers subscribe to the service. Preferably the switch matrix is sufficiently flexible to allow serving N subscriber lines 'simultaneously' in a time division multiple access (TDMA) fashion using DSP resources for full provisioning of M lines, with M < N.

<u>Summary</u>

Embodiments disclosed in the above mentioned application may have a crosstalk cancellation problem. Crosstalk channel estimation can only occur over M lines simultaneously, and hence the M lines taking part in the crosstalk channel estimation process must be cycled in order to obtain the full crosstalk matrix. This becomes a lengthy process.

The object of embodiments of the invention is to provide an access node and a method allowing for improved crosstalk estimation.

According to an aspect of the invention there is provided an access node for connecting N subscriber lines. The access node comprises M digital signal processors configured for generating M pilot signals (M being smaller than N), a controller, and a signal handling part. The controller is configured for assigning M subscriber lines of said N subscriber lines for transmission of said M pilot signals, and for associating at least a first unassigned subscriber line of said N subscriber lines with a first assigned subscriber line of said M assigned subscriber lines. The signal handling part is controlled by said controller and is adapted for transmitting a first pilot signal of said M pilot signals, to be transmitted over the first assigned subscriber line, simultaneously to at least the first unassigned subscriber line and the first assigned subscriber line.

In that way the signal handling part can transmit pilot signals to assigned as well as unassigned subscriber lines, and hence receive related error samples from those lines. Indeed, since the first pilot signal is transmitted simultaneously to at least the first unassigned subscriber line and the associated first assigned subscriber line, the corresponding assigned and unassigned subscribers can both extract error samples and send those error samples back to the access node. As a consequence, compared to prior art techniques, less cycles are needed to obtain a full crosstalk matrix, so that crosstalk estimation is improved.

It is noted that transmitting the first pilot signal simultaneously to at least the first unassigned subscriber line and the first assigned subscriber line, implies that the first pilot signal is directed simultaneously in the direction of at least the first unassigned subscriber line and the first assigned subscriber line. However, the generated pilot signal may be subject to further signal treatment steps between the signal handling part and the subscriber lines, such as a phase inversion, see further, before being put on the respective subscriber line.

Embodiments of the invention are based *inter alia* on the inventive insight that redundancy in Walsh Hadamard sequences can be exploited to generate estimation symbols that allows simultaneous estimation of all downstream crosstalk channels. In preferred embodiments of the invention the digital signal processors use Walsh Hadamard sequences as pilot sequences for estimating all channels in the system (direct + crosstalk) in parallel.

In an embodiment the access node is configured to receive error samples from the M assigned subscriber lines as well as from at least the first unassigned subscriber line; and to obtain a crosstalk matrix based on the received error samples; said error samples being obtained in response to the transmitted pilot signals.

In an embodiment the controller is configured to associate each unassigned subscriber line of said N subscriber lines with an assigned subscriber line of M assigned subscriber lines; and to transmit, for each assigned subscriber line, a pilot signal of said M pilot signals simultaneously to the assigned subscriber line and any associated unassigned subscriber line(s). In that way N error samples may be obtained whilst only M pilot signals need to be generated. Typically, only M subscribers will be provided with relevant data (i.e. data addressed to/requested by the M providers), whilst the N subscribes are provided with pilot signals. Such an embodiment can further reduce the time needed to obtain a full crosstalk matrix for the N subscriber lines.

According to a possible embodiment, the access node comprises at least M power scaling modules. The controller may be configured for controlling said at least M power scaling modules to adjust the power of each signal that is being transmitted simultaneously to an assigned subscriber line and any associated unassigned subscriber line(s). The at least M power scaling modules may be provided as N line drivers, each line driver having an adjustable gain. Alternatively, the at least M power scaling modules may be provided as digital scaling modules included the M digital signal processors.

According to a preferred embodiment, the controller is configured to change the association between at least the first unassigned subscriber line and the first assigned subscriber line, in a first time slot, into an association between at least the first unassigned subscriber line and a second assigned subscriber line of the M assigned subscriber lines, in a second time slot following said first time slot, said first assigned subscriber line being different from said second assigned subscriber line. Performing such association changes will further speed up the crosstalk estimation process. More preferably, the controller is configured to change the association between each unassigned subscriber line of said N subscriber lines and an assigned subscriber line of the M assigned subscriber lines, into a different association between each unassigned subscriber lines of said N subscriber lines and an assigned subscriber line of said M assigned subscriber lines, in a second time slot following said first time slot.

According to an embodiment of the invention the signal handling part is a switch controlled by the controller. Such a switch is preferably inserted between the M digital signal processors and N line adaption units adapted for connection to the N subscriber lines. The switch is configured for dynamically connecting a digital signal processor of the M digital signal processors with one or more line adaption units of the N line adaption units. The controller is configured for controlling the switch and the M digital signal processors. Note that this is merely an exemplary embodiment and that the skilled person can readily think of other implementations of the signal handling part.

According to an embodiment the access node further comprises at least one phase inverter arranged for being associated with at least one respective subscriber line of the N subscriber lines. The controller is further adapted to control said at least one phase inverter in order to be able to change the phase of at least one respective pilot signal to be transmitted over said at least one respective subscriber line. Preferably the at least one phase inverter is arranged between the signal handling part and the at least one subscriber line. In that way it is possible to change the phase of pilot signals that are being transmitted on the unassigned lines. In the event that the signal handling part is a switch, such an embodiment has the advantage that the number of switch changes that need to be performed by the switch can be reduced, allowing using a switch with lower switching times. Also, the use of phase inverters allows the minimum value for M to be as low as 2, whilst using frequency dependent pilot sequences (FDPS), see further.

According to a possible embodiment, the controller is configured to assign different sets of subscriber lines for data transmission in function of the time, based on a transmit traffic pattern, using a time division multiplex scheme.

According to a further developed embodiment the M digital signal processors are configured to use frequency dependent pilot sequences to generate the M pilot signals. Using frequency dependent pilot sequences, less transmit signals are needed for obtaining a full crosstalk matrix, further decreasing the crosstalk estimation time.

According to another aspect of the invention, there is provided a method for connecting N subscriber lines provided between an access node and N subscribers. The method comprises the following steps performed in the access node: assigning M subscriber lines of said N subscriber lines for transmission of M pilot signals, M being smaller than N; associating at least a first unassigned subscriber line of said N subscriber lines with a first assigned subscriber line of the M assigned subscriber lines; and transmitting a first pilot signal of said M pilot signals, to be transmitted over the first assigned subscriber line, simultaneously to at least the first unassigned subscriber line and the first assigned subscriber line.

According a possible embodiment, associating comprises associating each unassigned subscriber line of the N subscriber lines with an assigned subscriber line of the M assigned subscriber lines; wherein, for each assigned subscriber line, a pilot signal of the M pilot signals is transmitted simultaneously to the assigned subscriber line and any associated unassigned subscriber line(s).

According to a possible embodiment the method further comprises informing the (N-M) subscribers corresponding with the (N-M) non-assigned subscriber lines that they have not been assigned for data transmission. Alternatively or in addition, the M subscribers corresponding with the M assigned subscriber lines may be informed that they have been assigned for data transmission. Similar steps may be performed for upstream data transmission.

In a preferred embodiment, the method comprises adjusting the power of each signal that is being transmitted simultaneously to an assigned subscriber line and any associated unassigned subscriber line(s) in function of the number of associated unassigned subscriber lines.

According to embodiments, associating of at least the first unassigned subscriber line with the first assigned subscriber line, is done in a first time slot, and the method further comprises associating at least the first unassigned subscriber line with a second assigned subscriber line of the M assigned subscriber lines, in a second time slot following said first time slot, said first assigned subscriber line being different from said second assigned subscriber line. In addition or alternatively, associating of at least the first unassigned subscriber line with the first assigned subscriber line, is done in a first time slot, and the method further comprises changing the phase of the first pilot signal that is to be transmitted over at least the first unassigned subscriber line, in a second time slot following said first time slot. In that way the required pilot sequences can be transmitted over the assigned and unassigned lines, so that crosstalk can be efficiently estimated whilst avoiding lengthy processes.

According to yet another aspect, the invention relates to a method for connecting N subscriber lines provided between an access node and N subscribers. The method comprises the following steps: receiving M transmit signals including M pilot signals, at N subscribers, which M transmit signals have been simultaneously transmitted by the access node to M subscribers assigned for data transmission by the access node, and to (N-M) unassigned subscribers, M being smaller than N; extracting data from the M transmit signals at the M assigned subscribers; extracting error samples at the M assigned and (N-M) unassigned subscribers based on the M received pilot signals; sending by the N subscribers of the respective extracted error samples to the access node. Preferably, the respective extracted error samples are used for performing crosstalk channel estimation.


Brief description of the figures


The accompanying drawings are used to illustrate presently preferred non-limiting exemplary embodiments of devices of the present invention. The above and other advantages of the features and objects of the invention will become more apparent and the invention will be better understood from the following detailed description when read in conjunction with the accompanying drawings, in which:

Figures 1A-1C represent different access topologies for current and next generation copper-access;
Figure 2 illustrates schematically an exemplary embodiment of an access node according to the invention;
Figure 3 illustrates a further exemplary embodiment of an access node according to the invention;
Figure 4 is a flowchart illustrating an embodiment of the method of the invention; and
Figure 5 illustrates schematically another exemplary embodiment of an access node according to the invention.


Detailed description of the figures


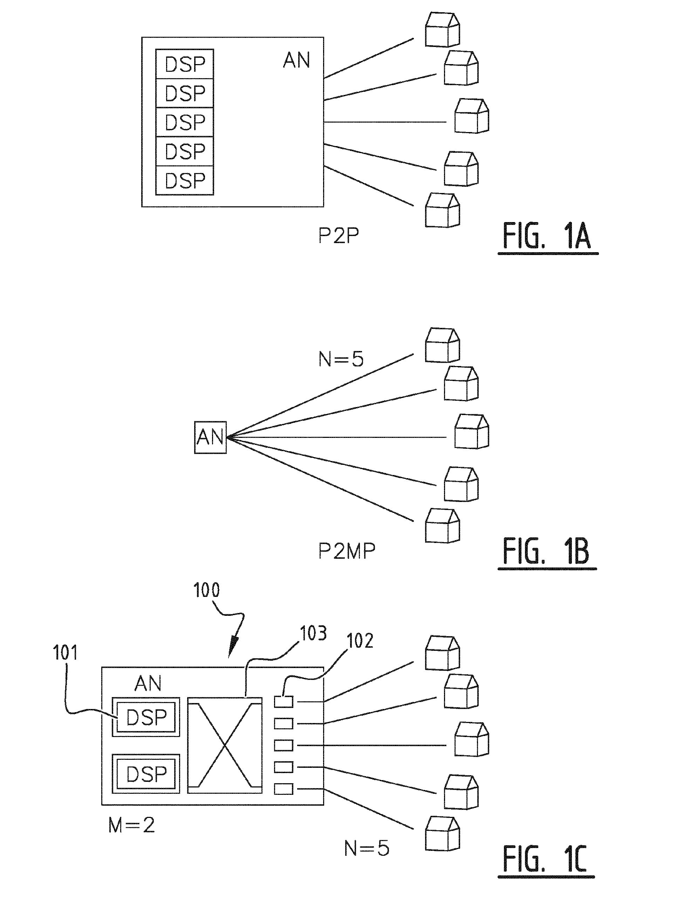

Figures 1A-1C illustrate three access topologies: point-to-point (P2P), point-to-multipoint (P2MP), and underprovisioned point-to-point.

In a classical point-to-point access technology, each subscriber is connected to a dedicated transceiver in the access node, wherein each transceiver includes a digital signal processor (DSP), see figure 1A. An advantage of this scheme is that each subscriber has its dedicated channel. This maximizes the capacity available for each subscriber, and reduces the interdependencies between neighbouring users. A disadvantage is that a dedicated transceiver is required for each subscriber, with implications on the access node (AN) size. Such a scheme suffers from crosstalk, but crosstalk cancellation techniques, such as joint signal processing can address this shortcoming.

When the point-to-multipoint scheme is used as illustrated in figure 1B, there is provided only one transceiver at the access node (AN), i.e. there is provided only one transceiver per subscriber. An obvious advantage of this case is that a single transceiver at the access node may serve multiple subscribers, in the example N subscribers (N=5). A disadvantage of this technique is that neighbouring subscribers need to time-share or frequency-share their bandwidth. This will reduce the average bandwidth available to each subscriber with a factor of M(t), where M is the number of subscribers at time t. Another disadvantage is that the power available at the access node will be divided into N lines.

A third solution consists in providing a so-called underprovisioned point-to-point scheme, as illustrated in figure 1C. Such a solution is disclosed in detail in European patent application with publication number EP 2 536 034 in the name of the Applicant, the content of which is included in its entirety by reference. In the scheme of figure 1C there is used an access node (AN) having M first transceiver circuitries 101, and N second transceiver circuitries 102, wherein N corresponds with the number of subscribers to be connected, and M is smaller than N. Further, there is provided a switch 103 between the first transceiver circuitries 101 and the second transceiver circuitries 102. The switch 103 is configured to propagate an analogue signal received from a particular input port towards a particular output port that is in one-to-one relationship with the particular input port. To receive and transmit data, typically, paths are dynamically set up following some predetermined Time Division Multiplex Access (TDMA) scheme, taking into account the actual traffic demands. There is provided a controller (not shown in figure 1C) to control the switch 103, based on instructions from the digital signal processors included in the first transceiver circuitries 101. Compared to point-to-point, such a scheme has the advantage that less transceiver circuitries are required, whilst still allowing tuning the front end settings per line. However, such a solution has the disadvantage that crosstalk channel estimation can only occur over M lines simultaneously, and hence the M lines taking part in the crosstalk channel estimation process must be cycled in order to obtain the full crosstalk matrix. This is a lengthy process. The object of embodiments of the invention is to provide an improved access node and a method for crosstalk cancellation.

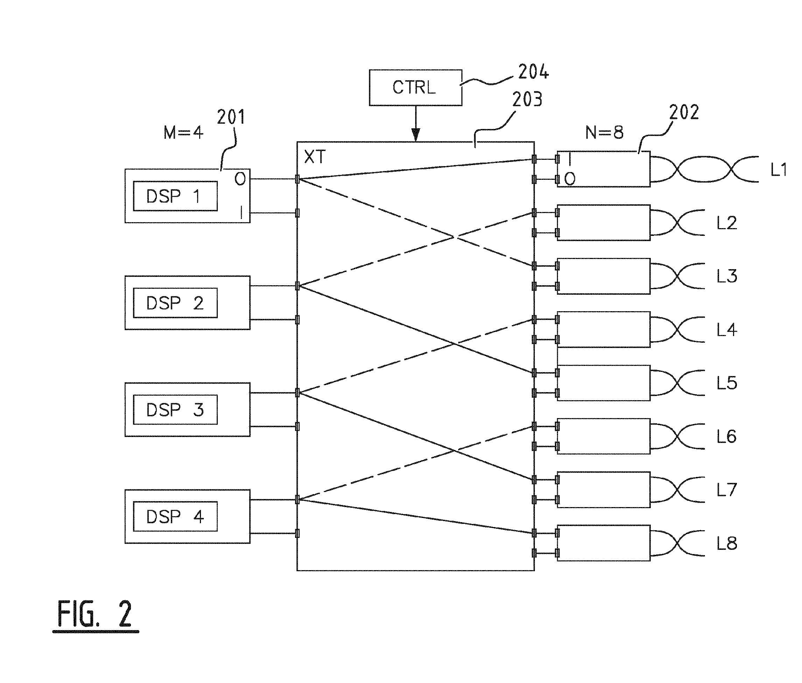

Figure 2 illustrates an embodiment of an access node of the invention comprising M first transceiver circuitries 201, N second transceiver circuitries 202 and a signal handling part formed by a switch 203 controlled by a controller 204. In the exemplary embodiment of figure 2, M = 4 and N = 8. This is merely an example, and M may be any value larger than or equal to 2, and N may be any value larger than M. In the example of figure 2 it is assumed that lines L1, L5, L7 and L8 are selected for downstream data transmission. Using the known method disclosed in the above mentioned European patent application with publication number EP 2 536 034, the switch matrix 203 would be controlled in such a way that for each assigned subscriber line L1, L5, L7, L8 there is selected one first transceiver circuitry 201, and only the connections indicated in full lines in switch 203 would be made. According to embodiments of the invention, each unassigned subscriber line L2, L3, L4 and L6 - in the example there are 4 unassigned subscriber lines (N - M = 4) - is also associated with a first circuitry 201, as indicated using interrupted lines in switch 203. In other words, a signal will be transmitted through every line L1-L8. Figure 2 illustrates the situation at time t1. If it is assumed that at time t2 the same lines L1, L5, L7 and L8 are selected for downstream data transmission, then the association with the unassigned subscriber lines is preferably different, e.g.

| t1 | DSP1 | -> L1 | DSP2 | -> L5 | DSP3 | -> L7 | DSP4 | -> L8 |
|----|------|-------|------|-------|------|-------|------|-------|
|    |      | -> L3 |      | -> L2 |      | -> L4 |      | -> L6 |
| t2 | DSP1 | -> L1 | DSP2 | -> L5 | DSP3 | -> L7 | DSP4 | -> L8 |
|    |      | -> L2 |      | -> L3 |      | -> L6 |      | -> L4 |

By changing the associations a sufficient number of times, it is possible to perform a full cross talk matrix suitable for crosstalk estimation on all lines L1-L8. According to a conventional approach mutually orthogonal pilot signals are transmitted over the channels, and the received signals are correlated with each pilot signal in return. Following such a conventional approach the associations would have to be changed four times. However, more advanced techniques exist - see e.g. US patent with publication number US 8,218,419 B2 in the name of the Applicant - allowing to estimate the channels in less channel uses, e.g. by transmitting pilot sequences that depend on tone as well as time.
The skilled person understands that it is also possible to perform associations for only a number of unassigned subscriber lines and not for all unassigned subscriber lines. However, when following such an approach, more association changes will be needed, resulting in a longer cross talk estimation time for obtaining the full cross talk matrix.

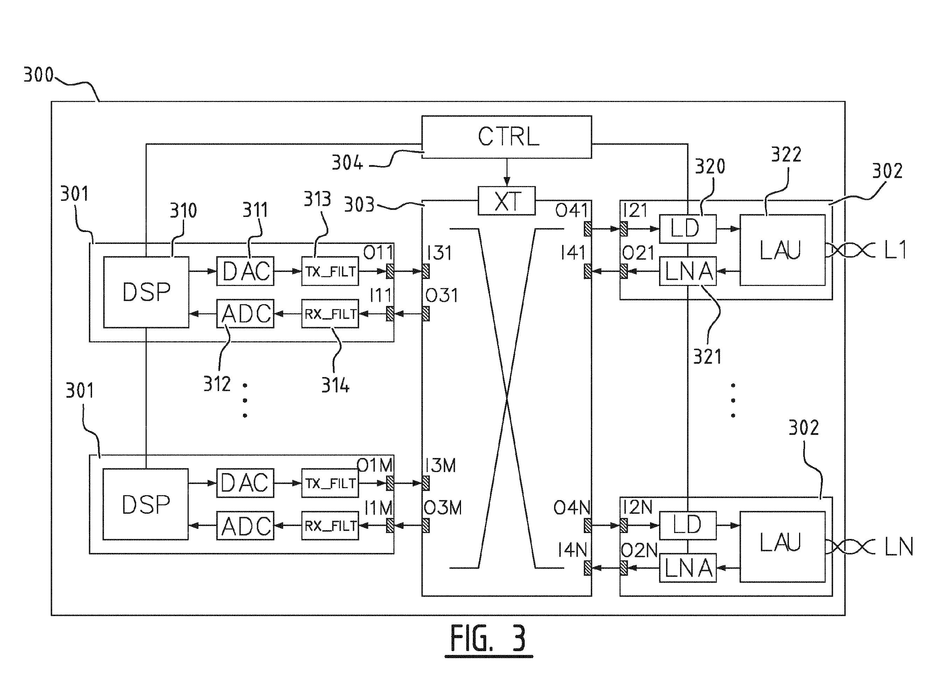

Figure 3 illustrates a more detailed embodiment of an access node 300 of the invention. The access node comprises first transceiver circuitry 301, second transceiver circuitry 302, a switch 303 and a controller 304. The first transceiver circuitry comprises a digital signal processor 310, a digital-to-analogue converter 311, an analogue-to-digital converter 312, a transmit filter 313, and receive filter 314.
The DSP 310 is for encoding and modulating user and control data into digital data symbols, and for demodulating and decoding user and control data from digital data symbols. In a possible embodiment, the DSP 310 may be configured to encode and decode discrete multi-tone (DMT) data symbols over multiple orthogonal carriers (also known as orthogonal frequency division multiplexing (OFDM) communication).
The following transmit steps are typically performed within the DSP 310:

- data encoding, such as data multiplexing, framing, scrambling, error correction encoding and interleaving,
- signal modulation, comprising the steps of ordering the carriers according to a carrier ordering table, parsing the encoded bit stream according to the bit loadings of the ordered carriers, and mapping each chunk of bits onto an appropriate transmit constellation point (with respective carrier amplitude and phase),
- signal scaling,
- Inverse Fast Fourier Transform (IFFT)
- Cyclic Prefix (CP) insertion, and
- time-windowing.

In a possible embodiment, the digital scaling may be controlled by the controller 304. More in particular the controller 304 may be configured for controlling the signal scaling by the M DSP's to adjust the power of each digital signal in function of the number of lines that the signal is being sent to. E.g. if N = 9 and M = 4, a signal may be sent simultaneously either to two lines or to three lines. The digital scaling may then be controlled accordingly by the controller 304. Alternatively the lines drivers 320 could be controlled, see further.

The following receive steps are typically performed within the DSP 310:

- time-domain signal equalization,
- Cyclic Prefix (CP) removal,
- Fast Fourier Transform (FFT),
- frequency-domain signal equalization,
- signal demodulation and detection, comprising the steps of applying to each and every equalized frequency sample an appropriate constellation grid, the pattern of which depends on the respective carrier bit loading, detecting the expected transmit constellation point and the corresponding transmit bit sequence, and re-ordering all the detected chunks of bits according to the carrier ordering table,
- data decoding, such as data de-interleaving, RS decoding (byte errors, if any, are corrected during this step), de-scrambling, frame delineation and de-multiplexing.

The second transceiver circuitry 302 comprises a line driver (LD) 320 for amplifying the transmit signal and for driving the transmission line, and a low noise amplifier (LNA) 321 for amplifying the receive signal with a low noise. In a preferred embodiment the line driver 320 is controlled by the controller 304 in order to adjust the amplifying gain in function of the number of lines that the transmit signal is sent to. E.g. for the example of figure 2, where the same transmit signal is sent simultaneously over two lines the gain could be the double of the gain of a line driver of a prior art solution where no signals are transmitted over the unassigned subscriber lines. The skilled person understands that the gain may be adjusted depending on the number of lines that are being used simultaneously by a single digital signal processor.

The second transceiver circuitry further comprises a line adaption unit (LAU) 322. The LAU 322 comprises a hybrid for coupling the transmitter output to the transmission line and the transmission line to the receiver input, while achieving a low transmitter-receiver coupling ratio, and may further comprise additional filters and impedance matching circuitry.

In a preferred embodiment, a set of Walsh Hadamard sequences comprising binary orthogonal sequences is used. In a possible assignment scheme, a subscriber line is assigned a single sequence, and each bit of the sequence is modulated on every pilot carrier of an estimation symbol. In this case, and for a given symbol position, half of the sequences will have bit value 1, the other half of the sequences will have bit value 0. In principle, the same pilot carriers (and the time-domain signal represented through it) can be sent on all lines with the same bit value, provided that the transmit power spectral density (PSD) of all lines is the same. However, the estimation symbol may contain other data, such as a sync flag, a table indicating the time slots in which data may be sent such as a multiple access plan (MAP), or data on the non-pilot carriers. Such data is user-specific.

In an over-subscription mode, a time slot can only be utilized by M out of N lines simultaneously, as discussed above in connection with figure 2. Hence, user-specific data can only be transmitted to M distinct subscribers. Which lines are selected is communicated to the CPEs upfront, e.g. through dynamic resource allocation (DRA). This can be symbol-based or time division duplexing (TDD) frame based. In the latter, and without loss of generality, the TDD frame containing the sync symbol will be assigned to M lines, and the other N-M lines will not expect data symbols on their lines. However, due to the redundancy of the sync symbol, and with the appropriate digital or analog power scaling, the same digitally generated signal can be sent out on two lines simultaneously.

In the simplified example of two lines using the same pilot bit, e.g. lines L1 and L3 in figure 2, the first line L1 is assigned to modulate data (e.g. sync flag, MAP) on the estimation symbol. The same symbol, containing data carriers and pilot carriers, is sent on the third line L3. A fiber termination unit receiver of the subscriber associated with the first line (first FTU-R) will extract the data, as well as error samples on the pilot carriers. The extracted error samples are fed back to the second transceiver circuitry 302 of the first line L1 at an upstream transmit opportunity, allowing the controller 304, in particular a vector control entity (VCE), to compute all crosstalk incoming the first line L1. As the subscriber associated with the third line L3 is not expecting data, a fiber termination unit receiver of the subscriber associated with the third line L3 (third FTU-R) will only extract error samples on the pilot carriers. It feeds back these error samples at its upstream transmit opportunity, allowing the controller 304, in particular a vector control entity (VCE), to compute all crosstalk incoming the third line. In this manner, all downstream crosstalk channels can be estimated simultaneously.

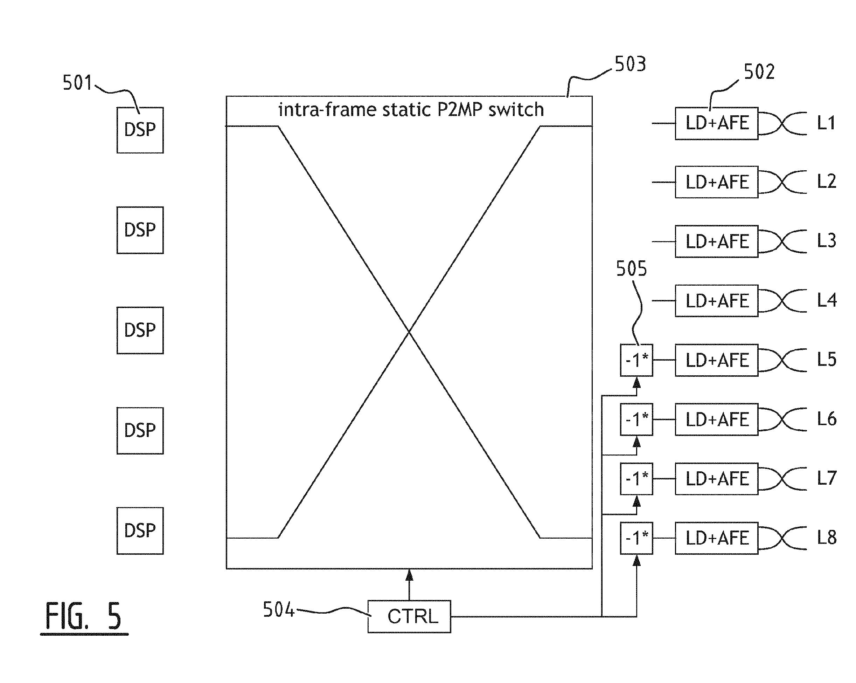

In other embodiments a more sophisticated assignment scheme may be used, spreading sequences not only over time, but also over carriers, called frequency dependent pilot sequences (FDPS). The same principle applies as above, when the lines to transmit data on their symbols containing the pilot sequence, are assigned carefully, as will become apparent in the examples illustrated below with reference to figure 5. In case of a FDPS spread over 8 tones and 2 time slots, for each symbol position there are always 2 sequences with the same frequency dependent pilot bits. This allows achieving an over-subscription factor of 2.

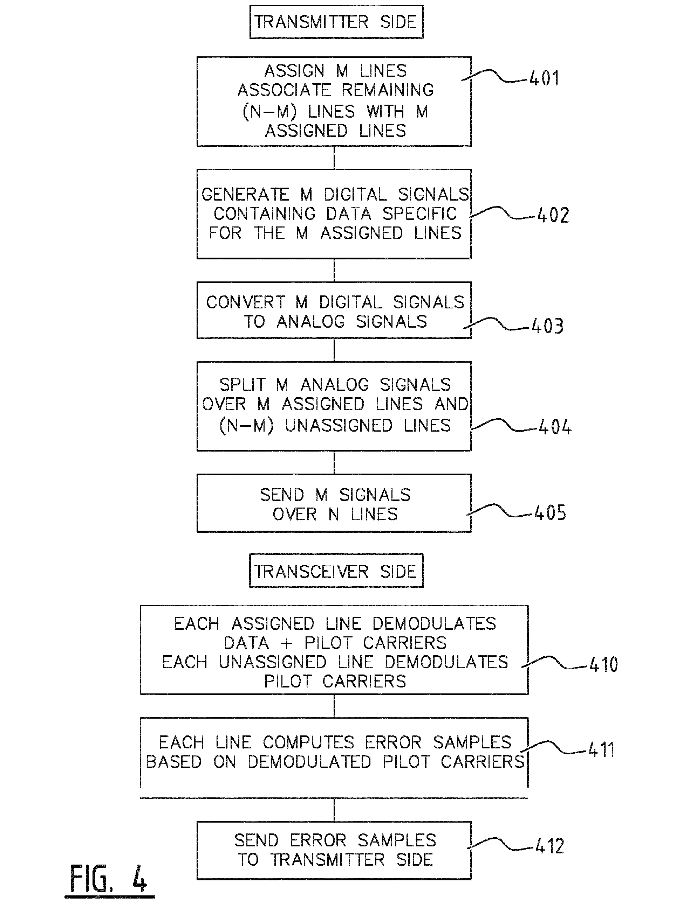

In an exemplary embodiment of the method of the invention, illustrated in figure 4, the flow at a transmitter side is as follows. In a first step 401, for a given estimation symbol position, M lines are assigned for downstream data transmission, with no data transmission on the remaining N-M lines, i.e. no data intended for the subscribers associated with the N-M unassigned lines is transmitted. Preferably, the M lines are chosen such that for every unassigned line n out of the N-M unassigned lines there exists an assigned line m out of the M assigned lines for which the pilot bit (or bits in case of FDPS) on unassigned line n is the same as on assigned line m. For each such unassigned line n, a single line m' is selected from the set of assigned lines with the same pilot bit(s).

In a second step 402, M estimation symbols are generated for the M assigned subscriber lines, containing data specific to the M assigned subscriber lines. Digital time domain samples are generated for the M estimation symbols through an IFFT operation. In this step, for all assigned lines m' selected in the previous step, an appropriate digital scaling may be applied to compensate for the split of the signal over two or more channels. Alternatively, the power split may be compensated by adjusting the gain of the line drivers corresponding with the two or more channels. In both cases, the appropriate scaling could be performed through a calibration step that is performed once, e.g. at system design or startup, or periodically, e.g. tracked during show time.

In a third step 403, analog time domain signals are created by passing the M digital time domain samples through M DACs.

In a fourth step 404, for each line m', the analog signal is split over line m' and its corresponding line(s) n. In a fifth step 405, the transmit signals are put on the N subscriber lines over N line adaption units.

In the exemplary embodiment of figure 4, the flow at the transceiver side is as follows. In a step 410, each line m out of the M lines demodulates both the data and the pilot carriers, and each line n out of the N-M lines demodulates only the pilot carriers, and potentially some broadcast data such as a multiple access plan (MAP). In step 411, each line out of the N subscriber lines computes error samples based on the demodulated pilot carriers and in step 412 each line feeds the error samples back to the controller at a transmit opportunity.

Now a more advanced embodiment of the invention will be illustrated with reference to figure 5. In order to better understand the advantages of the embodiment of figure 5, first some principles of Walsh-Hadamard sequences are recalled. Walsh-Hadamard sequences can be defined in the form of Hadamard matrices $H_{2K}$, where 2K is the length of the sequence:

$$H_{2K} = \begin{matrix} H_K & H_K \\ H_K & -H_K \end{matrix}$$

If 2K = 8, this results in the following matrix:

In the embodiment of figure 2, this would imply that switch 203 needs to be reset a number of times to transmit the pilot sequences above. To illustrate this insight, it is assumed that M = 4 and N = 8. The sequences to be sent on the different lines are shown in table 1 below.

Table 1

| Time/line | t1 | t2 | t3 | t4 | t5 | t6 | t7 | t8 |
|---|---|---|---|---|---|---|---|---|
| L1 | **-1** | **-1** | **-1** | **-1** | **-1** | **-1** | **-1** | **-1** |
| L2 | -1 | 1 | -1 | 1 | -1 | 1 | -1 | 1 |

(continued)

| Time/line | t1 | t2 | t3 | t4 | t5 | t6 | t7 | t8 |
|---|---|---|---|---|---|---|---|---|
| L3 | -1 | -1 | 1 | 1 | **-1** | **-1** | 1 | 1 |
| L4 | -1 | 1 | 1 | -1 | -1 | 1 | 1 | -1 |
| L5 | **-1** | **-1** | **-1** | **-1** | 1 | 1 | 1 | 1 |
| L6 | -1 | 1 | -1 | 1 | 1 | -1 | 1 | -1 |
| L7 | -1 | -1 | 1 | 1 | 1 | 1 | -1 | -1 |
| L8 | -1 | 1 | 1 | -1 | 1 | -1 | -1 | 1 |

On times t1 to t4, the same symbols are sent on lines L1 and L5 (indicated in bolt in table 1 above), L2 and L6, L3 and L7, and L4 and L8, respectively. On times t5 and t6, the same symbols are sent on L1 and L3 (indicated in bolt in table 1 above), L2 and L4, L5 and L7, and L6 and L8, respectively. On times t7 and t8, the same symbols are sent on L1 and L7 (indicated in bolt in table 1 above), L2 and L8, L3 and L4, and L5 and L6, respectively. This implies that the switch needs to be reset:

- at time t5, to change the association from (L1, L5) to (L1, L3), etc; and
- at time t7, to change the association from (L1, L3) to (L1, L7), etc.

In order to reduce the number of times that switching needs to be performed, the embodiment of figure 5 may be used. In the embodiment of figure 5 it was assumed that M = 4 and N = 8. However, the skilled person will understand that the same principles apply for other values of M and N. The embodiment of figure 5 corresponds with the embodiment of figure 2, with this difference that a number of phase invertors 505 have been introduced between the switch 503 and the transceiver circuitries 502 for lines L4-L8. Those phase inverters 505 are also controlled by the controller 504. Returning to the example given above, the phase inverters may be set by the controller 504 to invert the phase in the time period t4-t8, as indicated with an asterisk in table 2 below. In that way the switch does not need to be reset at times t4 and t6.

Table 2

| Time/line | t1 | t2 | t3 | t4 | t5 | t6 | t7 | t8 |
|---|---|---|---|---|---|---|---|---|
| L1 | **-1** | **-1** | **-1** | **-1** | **-1** | **-1** | **-1** | **-1** |
| L2 | -1 | 1 | -1 | 1 | -1 | 1 | -1 | 1 |
| L3 | -1 | -1 | 1 | 1 | -1 | -1 | 1 | 1 |
| L4 | -1 | 1 | 1 | -1 | -1 | 1 | 1 | -1 |
| L5 | **-1** | **-1** | **-1** | **-1** | **1*** | **1*** | **1*** | **1*** |
| L6 | -1 | 1 | -1 | 1 | 1* | -1* | 1* | -1* |
| L7 | -1 | -1 | 1 | 1 | 1* | 1* | -1* | -1* |
| L8 | -1 | 1 | 1 | -1 | 1* | -1* | -1* | 1* |
| * phase shift performed | | | | | | | | |

It is noted that another advantageous embodiment may use frequency dependent pilot carriers. E.g. two frequencies may be used, resulting in the situation of table 3 below:

Table 3

| Time/line | t1 | | t2 | | t3 | | t4 | |
|---|---|---|---|---|---|---|---|---|
| L1 | **-1** | **-1** | **-1** | **-1** | **-1** | **-1** | **-1** | **-1** |
| L2 | -1 | 1 | -1 | 1 | -1 | 1 | -1 | 1 |
| L3 | -1 | -1 | 1 | 1 | -1 | -1 | 1 | 1 |

(continued)

| Time/line | t1 | | t2 | | t3 | | t4 | |
|---|---|---|---|---|---|---|---|---|
| L4 | -1 | 1 | 1 | -1 | -1 | 1 | 1 | -1 |
| L5 | **-1** | **-1** | **-1** | **-1** | **1\*** | **1\*** | **1\*** | **1\*** |
| L6 | -1 | 1 | -1 | 1 | 1\* | -1\* | 1\* | -1\* |
| L7 | -1 | -1 | 1 | 1 | 1\* | 1\* | -1\* | -1\* |
| L8 | -1 | 1 | 1 | -1 | 1\* | -1\* | -1\* | 1\* |
| \* phase shift performed | | | | | | | | |

Using phase inverters 505 has the advantage that the switch 503 may be slower, and that frequency dependent pilot sequences may be used, also in embodiments where M = 2. An example where M = 2 and N = 8 is illustrated in table 4. In this example phase inverters may be provided for lines L3-L8. In the example of table 4 lines L1, L3, L5 and L7 are associated with DSP1, and lines L2, L4, L6, L8 with DSP2.

Table 4

| Time/line | t1 | | t2 | | t3 | | t4 | |
|---|---|---|---|---|---|---|---|---|
| L1 | **-1** | **-1** | **-1** | **-1** | **-1** | **-1** | **-1** | **-1** |
| L2 | -1 | 1 | -1 | 1 | -1 | 1 | -1 | 1 |
| L3 | **-1** | **-1** | **1\*** | **1\*** | **-1** | **-1** | **1\*** | **1\*** |
| L4 | -1 | 1 | 1\* | -1\* | -1 | 1 | 1\* | -1\* |
| L5 | **-1** | **-1** | **-1** | **-1** | **1\*** | **1\*** | **1\*** | **1\*** |
| L6 | -1 | 1 | -1 | 1 | 1\* | -1\* | 1\* | -1\* |
| L7 | **-1** | **-1** | **1\*** | **1\*** | **1\*** | **1\*** | **-1** | **-1** |
| L8 | -1 | 1 | 1\* | -1\* | 1\* | -1\* | -1 | 1 |
| \* phase shift performed | | | | | | | | |

The phase inverters may be set by the controller to invert the phase in the time period t2 to t4, as indicated with an asterisk in table 4 above. In that way the switch need not be reset at times t2, t3 and t4.
Whilst the principles of the invention have been set out above in connection with specific embodiments, it is to be understood that this description is merely made by way of example and not as a limitation of the scope of protection which is determined by the appended claims.


**Claims**

1.  Access node for connecting N subscriber lines; said access node comprising:

    - M digital signal processors configured for generating M pilot signals; M being smaller than N;
    - a controller configured for assigning M subscriber lines of said N subscriber lines for transmission of said M pilot signals; and for associating at least a first unassigned subscriber line of said N subscriber lines with a first assigned subscriber line of said M assigned subscriber lines; and
    - a signal handling part controlled by said controller for transmitting a first pilot signal of said M pilot signals, to be transmitted over the first assigned subscriber line, simultaneously to at least the first unassigned subscriber line and the first assigned subscriber line.

2.  The access node of claim 1, wherein the access node is configured to receive error samples from the M assigned subscriber lines as well as from at least the first unassigned subscriber line; and to obtain a crosstalk matrix based on the received error samples; said error samples being obtained in response to the transmitted pilot signals.

3. The access node of claim 1 or 2, wherein the controller is configured to associate each unassigned subscriber line of said N subscriber lines with an assigned subscriber line of M assigned subscriber lines; and to transmit, for each assigned subscriber line, a pilot signal of said M pilot signals simultaneously to the assigned subscriber line and any associated unassigned subscriber line(s).

4. The access node of any one of the previous claims, further comprising at least one phase inverter arranged for being associated with at least one respective subscriber line of the N subscriber lines, said controller being further adapted to control said at least one phase inverter in order to be able to change the phase of at least one respective pilot signal to be transmitted over said at least one respective subscriber line.

5. The access node of any one of the previous claims, comprising at least M power scaling modules, wherein the controller is configured for controlling said at least M power scaling modules to adjust the power of each signal that is being transmitted simultaneously to an assigned subscriber line and any associated unassigned subscriber line(s).

6. The access node of claim 5, wherein the at least M power scaling modules are provided

   - as N line drivers, each line driver having an adjustable gain; or
   - as M digital scaling modules provided in the M digital signal processors.

7. The access node of any one of the previous claims, wherein the controller is configured to change the association between at least the first unassigned subscriber line and the first assigned subscriber line, in a first time slot, into an association between at least the first unassigned subscriber line and a second assigned subscriber line of the M assigned subscriber lines, in a second time slot following said first time slot, said first assigned subscriber line being different from said second assigned subscriber line.

8. The access node of any one of the previous claims, wherein the controller is configured to change the association between each unassigned subscriber line of said N subscriber lines and an assigned subscriber line of the M assigned subscriber lines, into a different association between each unassigned subscriber lines of said N subscriber lines and an assigned subscriber line of said M assigned subscriber lines, in a second time slot following said first time slot.

9. Access node of any one of the previous claims, wherein the M digital signal processors are configured to use frequency dependent pilot sequences to generate the M pilot signals.

10. Method for connecting N subscriber lines provided between an access node and N subscribers, said method comprising the following steps performed in the access node:

    - assigning M subscriber lines of said N subscriber lines for transmission of M pilot signals, M being smaller than N;
    - associating at least a first unassigned subscriber line of said N subscriber lines with a first assigned subscriber line of the M assigned subscriber lines; and
    - transmitting a first pilot signal of said M pilot signals, to be transmitted over the first assigned subscriber line, simultaneously to at least the first unassigned subscriber line and the first assigned subscriber line.

11. The method of claim 10, wherein the associating comprises associating each unassigned subscriber line of the N subscriber lines with an assigned subscriber line of the M assigned subscriber lines; wherein, for each assigned subscriber line, a pilot signal of the M pilot signals is transmitted simultaneously to the assigned subscriber line and any associated unassigned subscriber line(s).

12. The method of claim 10 or 11, comprising adjusting the power of each signal that is being transmitted simultaneously to an assigned subscriber line and any associated unassigned subscriber line(s) in function of the number of associated unassigned subscriber lines.

13. The method of any one of the claims 10-12, wherein associating of at least the first unassigned subscriber line with the first assigned subscriber line, is done in a first time slot, the method further comprising associating at least the first unassigned subscriber line with a second assigned subscriber line of the M assigned subscriber lines, in a second time slot following said first time slot, said first assigned subscriber line being different from said second assigned subscriber line; and/or the method further comprising changing the phase of the first pilot signal that is to be transmitted over at least the first unassigned subscriber line, in a second time slot following said first time slot.

14. Method for connecting N subscriber lines provided between an access node and N subscribers, said method comprising the following steps:

- receiving M transmit signals including M pilot signals at N subscribers, which M transmit signals have been simultaneously transmitted by the access node to M subscribers assigned for data transmission by the access node, and to (N-M) unassigned subscribers, M being smaller than N;
- extracting data from the M transmit signals at the M assigned subscribers;
- extracting error samples at the M assigned and (N-M) unassigned subscribers based on the M received pilot signals;
- sending by the N subscribers of the respective extracted error samples to the access node.

15. Method for connecting subscribers, comprising the method of any one of the claims 10-13 and the method of claim 14, wherein the respective extracted error samples are used for performing crosstalk channel estimation.

DSP
DSP
DSP
DSP
DSP

AN

P2P

**FIG. 1A**

N=5

AN

P2MP

**FIG. 1B**

100
103
102
101

AN

DSP

DSP

M=2

N=5

**FIG. 1C**

FIG. 2

EP 2 806 571 A1

FIG. 3

EP 2 806 571 A1

TRANSMITTER SIDE

ASSIGN M LINES
ASSOCIATE REMAINING
(N−M) LINES WITH M
ASSIGNED LINES ────401

GENERATE M DIGITAL SIGNALS
CONTAINING DATA SPECIFIC
FOR THE M ASSIGNED LINES ────402

CONVERT M DIGITAL SIGNALS
TO ANALOG SIGNALS ────403

SPLIT M ANALOG SIGNALS
OVER M ASSIGNED LINES AND
(N−M) UNASSIGNED LINES ────404

SEND M SIGNALS
OVER N LINES ────405

TRANSCEIVER SIDE

EACH ASSIGNED LINE DEMODULATES
DATA + PILOT CARRIERS
EACH UNASSIGNED LINE DEMODULATES
PILOT CARRIERS ────410

EACH LINE COMPUTES ERROR SAMPLES
BASED ON DEMODULATED PILOT CARRIERS ────411

SEND ERROR SAMPLES
TO TRANSMITTER SIDE ────412

FIG. 4

FIG. 5

501

502

503

504

505

DSP

DSP

DSP

DSP

DSP

intra-frame static P2MP switch

LD+AFE — L1
LD+AFE — L2
LD+AFE — L3
LD+AFE — L4
-1* — LD+AFE — L5
-1* — LD+AFE — L6
-1* — LD+AFE — L7
-1* — LD+AFE — L8

CTRL

EP 2 806 571 A1

16

Europäisches
Patentamt

European
Patent Office

Office européen
des brevets

# EUROPEAN SEARCH REPORT

Application Number

EP 13 30 5667

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/106605 A1 (ASHIKHMIN ALEXEI E [US] ET AL) 3 May 2012 (2012-05-03) <br><br> * paragraphs [0006], [0009] - [0011], [0012], [0024], [0090]; figure 3 * <br> ----- | 1-3, 9-12,14, 15 | INV. <br> H04B3/46 <br> H04L5/00 |
| A | US 2010/202281 A1 (KRAMER GERHARD GUENTER THEODOR [US] ET AL) 12 August 2010 (2010-08-12) * paragraphs [0005], [0027], [0065], [0071] * <br> ----- | 1-15 | |

TECHNICAL FIELDS
SEARCHED       (IPC)

H04B
H04L

The present search report has been drawn up for all claims

| Place of search | Date of completion of the search | Examiner |
|---|---|---|
| The Hague | 7 November 2013 | De Iulis, M |

EPO FORM 1503 03.82 (P04C01)

## ANNEX TO THE EUROPEAN SEARCH REPORT
## ON EUROPEAN PATENT APPLICATION NO.

EP 13 30 5667

This annex lists the patent family members relating to the patent documents cited in the above-mentioned European search report.
The members are as contained in the European Patent Office EDP file on
The European Patent Office is in no way liable for these particulars which are merely given for the purpose of information.

07-11-2013

| Patent document cited in search report | Publication date | Patent family member(s) | Publication date |
|---|---|---|---|
| US 2012106605 A1 | 03-05-2012 | CN 103190127 A<br>EP 2633658 A1<br>KR 20130093128 A<br>US 2012106605 A1<br>WO 2012057954 A1 | 03-07-2013<br>04-09-2013<br>21-08-2013<br>03-05-2012<br>03-05-2012 |
| US 2010202281 A1 | 12-08-2010 | CN 102318209 A<br>EP 2396894 A1<br>JP 5265026 B2<br>JP 2012517773 A<br>KR 20110126682 A<br>US 2010202281 A1<br>WO 2010093663 A1 | 11-01-2012<br>21-12-2011<br>14-08-2013<br>02-08-2012<br>23-11-2011<br>12-08-2010<br>19-08-2010 |

EPO FORM P0459

**REFERENCES CITED IN THE DESCRIPTION**

**Patent documents cited in the description**

- EP 2536034 A

- US 8218419 B2